Europäisches Patentamt

European Patent Office

Office européen des brevets

(11) Veröffentlichungsnummer: **0 320 787**
**A2**

## (12) EUROPÄISCHE PATENTANMELDUNG

(21) Anmeldenummer: 88120497.8

(51) Int. Cl.⁴: **H04N 7/14**

(22) Anmeldetag: 08.12.88

(30) Priorität: 18.12.87 DE 3743026

(43) Veröffentlichungstag der Anmeldung:
21.06.89 Patentblatt 89/25

(84) Benannte Vertragsstaaten:
AT CH DE ES FR IT LI NL

(71) Anmelder: Standard Elektrik Lorenz
Aktiengesellschaft
Lorenzstrasse 10
D-7000 Stuttgart 40(DE)

(72) Erfinder: Flohrer, Walter
Carl-Benz-Strasse 7
D-7141 Beilstein(DE)
Erfinder: Garcia-Victoria, Carlos
Schwalbenweg 15
D-7050 Waiblingen(DE)

(74) Vertreter: Gähr, Hans-Dieter, Dipl.-Ing. (FH) et
al
Standard Elektrik Lorenz AG Patent- und
Lizenzwesen Postfach 30 09 29
D-7000 Stuttgart 30(DE)

(54) Teilnehmergerät für Bildfernsprechen.

(57) Im Gehäuse (1) des Bildtelefons ist ein Bildwiedergabegerät (2) über einer Videokamera (6) angeordnet, deren optische Achsen (OA1, OA2) parallel gerichtet sind. Zwischen Betrachter und Wiedergabegerät (2) liegt ein um 45o geneigter, halbdurchlässiger Spiegel (4) im Strahlengang. Zwischen letzterem und der Kamera (6) ist ein undurchlässiger Spiegel (7) so angebracht, daß er den Strahlengang auf den halbdurchlässigen Spiegel (4) umlenkt.

EP 0 320 787 A2

## Teilnehmergerät für Bildfernsprechen

Die Erfindung betrifft ein Teilnehmergerät für Bildfernsprechen nach dem Oberbegriff des Anspruchs 1.

In der DE-OS 34 31 902 ist ein derartiges Teilnehmergerät beschrieben, in dessen Gehäuse eine Videokamera und ein Bildwiedergabegerät entweder parallel oder in einem bestimmten Winkel zueinander stehend untergebracht sind. Durch geeignete Spiegel werden die Strahlen beider Geräte so gelenkt, daß ihre Strahlenachsen vereinigt auf eine Öffnung des Gehäuses gerichtet sind. In bezug auf einen Benutzer fällt also der Strahlengang des Bildwiedergabegerätes mit dem der Videokamera, von der er aufgenommen wird, zusammen. Die Öffnung ist in der Vorderwand angebracht, das Gerät ist als Tisch- oder Standgerät so konzipiert, daß der Benutzer davor sitzen kann. Dabei nimmt die Kamera den Benutzer durch einen halbdurchlässigen Spiegel auf, während das Bild des Bildwiedergabegerätes an ihm umgelenkt wird. Bei einer zweiten Ausführung wird das Bild zuvor von einem undurchlässigen Spiegel auf den halbdurchlässigen gelenkt, und Kamera und Wiedergabegerät sind so angeordnet, daß ihre optischen Achsen parallel laufen.

Es hat sich jedoch gezeigt, daß der Abstand des Benutzers vom Gerät eine wichtige Rolle spielt. Wird er zu gering gewählt, so treten unerwünschte Verzerrungen im Bild auf, die von der Photografie her allgemein bekannt sind. Wird der Abstand zu groß, so wird die Erkennbarkeit des wiedergegebenen Bildes herabgesetzt. Das Wiedergabegerät, im Regelfall eine Bildröhre, kann der Handlichkeit des Bildtelefons wegen wiederum nicht beliebig vergrößert werden.

Der Erfindung liegt deshalb die Aufgabe zugrunde, das eingangs genannte Teilnehmergerät so zu verbessern, daß für eine Tischausführung ein ergonomisch richtiger Kameraabstand und ein parallaxen- und verzerrungsfreies Bild erzielt wird. Gelöst wird diese Aufgabe durch die im Anspruch 1 angegebenen Merkmale. Weiterbildungen sind den Unteransprüchen zu entnehmen. Die Lösung hat den Vorteil, daß der ergonomisch richtige Abstand, er beträgt beispielsweise etwa 1 m bei einer Objektivbrennweite von 80 mm, infolge der zweifachen Umlenkung des Kamerastrahlenganges problemlos herstellbar ist, weil die tatsächliche Entfernung des Benutzers vom Bildtelefon ungefähr halb so groß sein kann, so daß er die Vorgänge auf dem Bildschirm gut erkennen kann. Dieser Bildschirm ist zugleich Positionshilfe: sieht der Benutzer das vollständige Bild, ist er auch für den Partner im Bild, ohne Verzerrung und parallaxenfrei, d.h. die Partner sehen einander in die Augen, wenn sie jeweils in die Kamera blicken. Außerdem wird durch die doppelte Umlenkung des Strahlenvorganges von der Kamera ein seitenrichtiges Bild aufgenommen, das so übertragen werden kann.

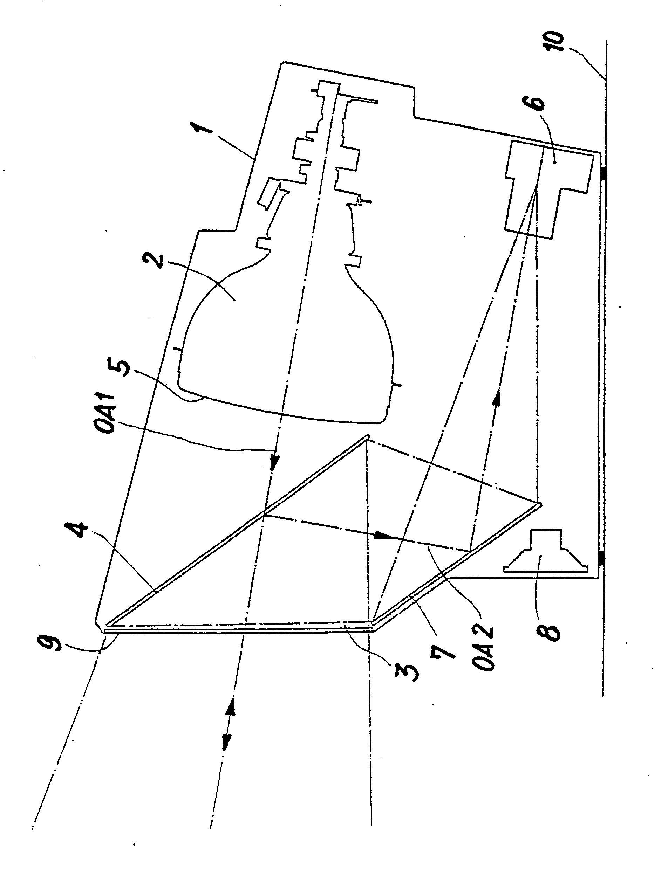

Die Erfindung wird an einem Ausführungsbeispiel erläutert, das in der zugehörigen Zeichnung dargestellt ist. Die Figur zeigt einen schematischen Längsschnitt durch ein erfindungsgemäßes Bildtelefon für Tischaufstellung.

In dem Gehäuse 1 ist oben im hinteren Teil eine Bildröhre 2 als Wiedergabegerät so angeordnet, daß ihre optische Achse OA1 auf einen vor dem Gerät sitzenden Benutzer gerichtet ist. Die genaue Einstellung läßt sich durch Stellvorrichtungen am Gehäuse vornehmen (nicht dargestellt), die die Neigung des Gehäuses relativ zur Unterlage (Tischplatte) 10 ändern. Der optimale Betrachtungs- oder Neigungswinkel beträgt 10° in der Mittelstellung, die nach oben und unten um etwa 5° verstellbar sein soll. Vor der Bildröhre wird eine entsprechende Öffnung 9 in der Vorderseite des Gehäuses 1 durch eine durchsichtige Abdeckplatte 3 verschlossen. Zwischen dieser Abdeckplatte und der Bildröhre 2 ist ein halbdurchlässiger Spiegel 4 eingefügt, der mit der optischen Achse OA1 der Bildröhre einen Winkel von 45° einschließt. Ein Benutzer kann durch die Abdeckplatte 3 und den Spiegel 4 hindurch das Bild auf dem Bildschirm 5 der Bildröhre 2 sehen. Durch die Zurücksetzung der Bildröhre 2 wird eine Abschattung erzielt, die störenden Lichteinfall verhindert. Günstig für die Handhabung und Erkennbarkeit hat sich eine 10-Zoll-Bildröhre erwiesen.

Unter der Bildröhre 2 ist im hinteren Teil des Gehäuses 1 eine Videokamera 6 angeordnet, deren optische Achse OA2 parallel zu der der Bildröhre 2 ausgerichtet ist. Der Strahlengang der Kamera 6 wird im vorderen Teil des Gehäuses an einem Spiegel 7 im Winkel von 90° reflektiert und trifft dann auf den halbdurchlässigen Spiegel 4, an dem er abermals um 90° parallel zur ursprünglichen Richtung abgelenkt wird, so daß zwischen halbdurchlässigem Spiegel 4 und Benutzer die beiden optischen Achsen OA1 und OA2 von Bildröhre und Kamera vereinigt sind.

Unten ist im vorderen Teil des Gehäuses 1 ein Lautsprecher 8 untergebracht, so daß für den Benutzer des Bildtelefons während eines Gespräches der Eindruck eines sprechenden Bildes entsteht.

Bei einer anderen, nicht dargestellten Ausführung ist der undurchlässige Spiegel 7 um eine quer zur optischen Achse der Kamera liegende Achse um 90° schwenkbar. In der geschwenkten Stellung des Spiegels 7 ist der Strahlengang auf den Boden des Gehäuses 1 gerichtet, so daß die Videokamera 6 durch eine entsprechende Öffnung im Boden ein unter das Bildtelefon geschobenes Dokument aufnehmen kann. Auf diese Weise können die Gesprächspartner auch bildliche oder schriftliche Darstellungen einander zur Kenntnis bringen.

**Ansprüche**

1. Teilnehmergerät für Bildfernsprechen mit einer Videokamera und einem Bildwiedergabegerät, einem halbdurchlässigen und einem undurchlässigen Spiegel in den Strahlengängen, **dadurch gekennzeichnet,** daß der halbdurchlässige Spiegel (4) in den Strahlengang zwischen Betrachter und Bildwiedergabegerät (2) und der undurchlässige Spiegel (7) in den Strahlengang zwischen halbdurchlässigen Spiegel (4) und Videokamera (6) so eingefügt ist, daß deren Strahlengang an beiden Spiegeln umgelenkt wird und mit dem des Bildwiedergabegerätes (2) für den Betrachter zusammenfällt.

2. Teilnehmergerät nach Anspruch 1, dadurch gekennzeichnet, daß die optischen Achsen (OA1, OA2) von Videokamera (6) und Bildwiedergabegerät (2) parallel gerichtet sind und beide Spiegel (4, 7) jeweils im Winkel von 45° zu diesen Achsen stehen.

3. Teilnehmergerät nach Anspruch 2, dadurch gekennzeichnet, daß Videokamera (6), Bildwiedergabegerät (2) und beide Spiegel (4, 7) in einem Gehäuse (1) für Tischaufstellung untergebracht sind, dessen Öffnung (9) für den Strahlendurchtritt mit einer durchsichtigen Abdeckplatte (3) verschlossen ist.

4. Teilnehmergerät nach Anspruch 3, dadurch gekennzeichnet, daß unter der Öffnung (9) ein Lautsprecher (8) im Gehäuse (1) angeordnet ist.

5. Teilnehmergerät nach Anspruch 4, dadurch gekennzeichnet, daß das Gehäuse (1) mit einer Stellvorrichtung zur Änderung seiner Neigung relativ zur Stellfläche (10) ausgerüstet ist.

6. Teilnehmergerät nach Anspruch 3, dadurch gekennzeichnet, daß der undurchlässige Spiegel (7) um eine waagerechte Achse um 90° schwenkbar ist und der Strahlengang der Videokamera (6) in der zweiten Stellung des Spiegels (7) auf eine Öffnung im Boden des Gehäuses (1) gerichtet ist.

9  4  OA1  5  2  1

3

7

OA2

8  6  10

EP 0 320 787 A2

W. FLOHRER - 14 -